# EUROPEAN PATENT SPECIFICATION

(11) **EP 3 019 716 B1**
(45) Date of publication and mention of the grant of the patent: **12.12.2018**
(21) Application number: 14822704.4
(22) Date of filing: 12.06.2014
(51) Int. Cl.: F02K 3/06, F02C 3/14

(54) **ANGLED CORE ENGINE**
ABGEWINKELTES KERNTRIEBWERK
GÉNÉRATEUR DE GAZ INCLINÉ

(30) Priority: 08.07.2013 US 201361843475 P
(43) Date of publication of application: 18.05.2016
(73) Proprietor: United Technologies Corporation, Farmington, CT 06032 (US)
(72) Inventor: PENDA, Allan R., Amston, Connecticut 06231 (US); CHANDLER, Jesse M., South Windsor, Connecticut 06074 (US); SUCIU, Gabriel L., Glastonbury, Connecticut 06033 (US)
(74) Representative: Dehns
(86) International application number: PCT/US2014/042051
(87) International publication number: WO 2015/006009

(56) References cited:
- EP-A1- 2 812 557
- WO-A2-02/081883
- WO-A2-02/081883
- GB-A- 2 400 411
- US-A- 3 068 647
- US-A1- 2005 060 983
- US-A1- 2011 056 208
- US-A1- 2012 111 018
- US-A1- 2013 052 004

## Description

### BACKGROUND

The present disclosure relates to an angled core engine for propelling a vehicle such as an aircraft.

A high efficiency small engine core, which includes a high pressure compressor, combustor, and a high pressure turbine, restricts the space available for low pressure rotor shafting. Recently, reverse flow core engines have been proposed. These reverse flow cores require the engine airflow to fully reverse direction twice.

A system having the features of the preamble of claim 1 is disclosed in WO 02/081883 A1.

Further systems having a propulsor section and a gas generator are disclosed in US3068647 A, GB 2400411 A and EP 2812557 A1.

### SUMMARY

In accordance with the present invention, there is provided a system as set forth in claim 1.

The system may further comprise the gas generator having an inlet and an air intake communicating with the inlet to deliver ambient air to the gas generator.

The gas generator may have a compressor section and a turbine section. The compressor section has at least one stage, and the turbine section has at least one stage.

Other details of the angled core engine are set forth in the following detailed description and the accompanying drawings wherein like reference numerals depict like elements.

### BRIEF DESCRIPTION OF THE DRAWINGS

FIG. 1 is a schematic representation of a system for driving a fluid operated device in accordance with the invention; and
FIG. 2 is a schematic representation of another system for driving a fluid operated device, falling outside the scope of the invention.

### DETAILED DESCRIPTION

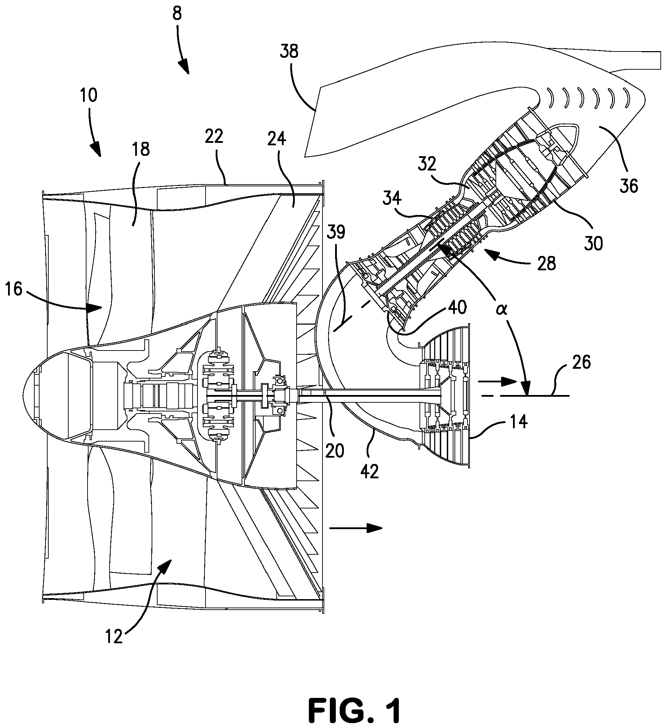

A system 8 for driving a fluid operated device of a gas turbine engine is shown in the FIG. 1. The system 8 may be used as a propulsion system for an aircraft in which the fluid operated device being driven is a free turbine for driving a rotary device such as a fan.

The system 8 comprises a propulsor 10 having a propulsor section 12 which includes a free turbine and a rotary device 16 such as a fan with a plurality of fan blades 18 which is driven by the fluid operated device or free turbine 14 via the shaft 20. The propulsor section 12 further includes a casing 22 surrounding the rotary device or fan 16 and a plurality of fan exit guide vanes 24 within the casing. The rotary device or fan 16 and the fluid operated device or free turbine 14 rotate about a first axis 26.

The system 8 further includes a gas generator 28 for generating an exhaust fluid such as an exhaust gas. The illustrated gas generator 28 is a reverse core engine which includes a compressor section 30 having one or more stages such as a low pressure compressor and a high pressure compressor, a combustion section 32 having one or more combustors, and a turbine section 34 having one or more stages such as a low pressure turbine and a high pressure turbine. The low pressure compressor in the gas generator 28 is driven by a low pressure turbine via a low pressure spool and a high pressure compressor in the gas generator 26 is driven by a high pressure turbine via a high pressure spool. The gas generator 28 has an inlet 36 which communicates with an air intake 38. The air intake 38 receives ambient air and delivers same to the inlet 36. The gas generator 28 is arranged to have a central axis 39 which is at an angle α to the first axis 26. The angle α is less than 90 degrees.

The outlet 40 of the gas generator communicates with a plenum 42 for delivering the exhaust gas generated by the gas generator 28 to the free turbine 14. As can be seen from FIG. 1, the fluid passageway or plenum 42 may have an arcuately shaped conduit 44 which turns the exhaust gas flow exiting the gas generator 28 by an amount less than 90 degrees.

As shown in FIG. 1, the fluid passageway or plenum 42 is located between the fluid operated device or free turbine 14 and the fan exit guide vanes 24.

The exhaust gas is used to drive the fluid operated device or free turbine 14 which in turns drives the rotary device or fan 16. After passing through the fluid operated device or free turbine 14, the exhaust gas exits rearwardly along with the fluid flow created by the rotary device or fan 16. The exhaust gas exiting the free turbine 14 flows in the same direction as the fluid flow created by the rotary device or fan 16.

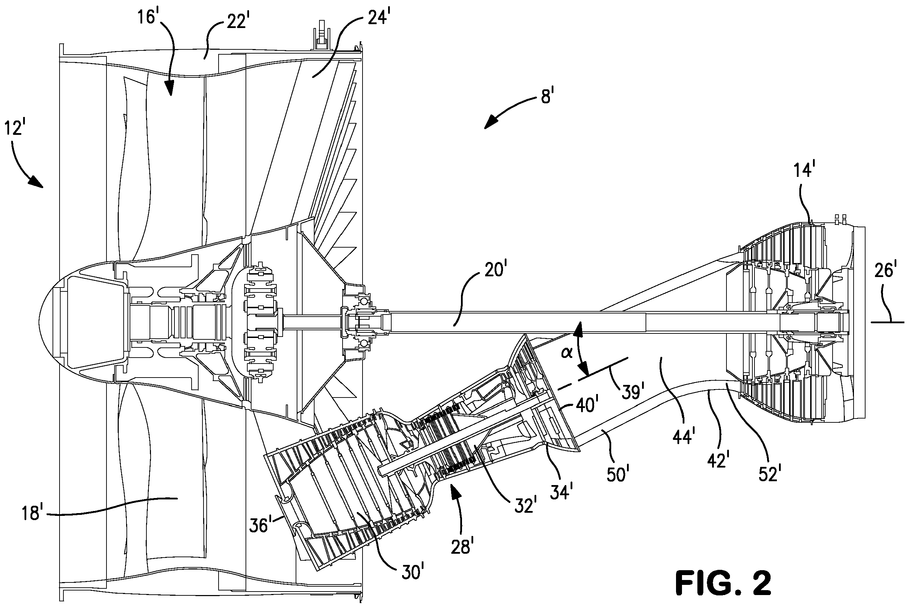

Referring now to FIG. 2, there is shown a system 8' which falls outside the scope of the invention. The system 8' may be used as a propulsion system for an aircraft in which the fluid operated device being driven is a free turbine for driving a rotary device such as a fan.

The system 8' comprises a propulsor section 12' which includes a fluid operated device 14' such as a free turbine and a rotary device 16' such as a fan with a plurality of fan blades 18' which is driven by the fluid operated device or free turbine 14' via the shaft 20'. The propulsion section 12' further includes a casing 22' surrounding the rotary device or fan 16' and a plurality of fan exit guide vanes 24' within the casing 22'. The rotary device or fan 16' and the fluid operated device or free turbine 14' rotate about a first axis 26'.

The system 8' further includes a fluid source such as gas generator 28' for generating an exhaust fluid such as an exhaust gas. The illustrated gas generator 28' is an engine which includes a compressor section 30' having one or more stages such as a low pressure compressor and a high pressure compressor, a combustion section 32' having one or more combustors, and a turbine section 34' having one or more stages such as a low pressure turbine and a high pressure turbine. The low pressure compressor in the gas generator 28' is driven by a low pressure turbine via a low pressure spool and a high pressure compressor in the gas generator 28' is driven by a high pressure turbine via a high pressure spool. The gas generator 28' has an inlet 36' which receives air from the rotary device or fan 16'. The inlet 36' of the gas generator 28' may be positioned adjacent the fan exit guide vanes 24'. This allows the gas generator 28' to be at least partially housed within the casing 22'. The gas generator 28' is arranged to have a central axis 39' which is at an angle α to the first axis 26'. The angle α is less than 90 degrees.

The outlet 40' of the gas generator communicates with a fluid passageway 42' for delivering the exhaust gas generator by the exhaust gas generator 28' to the free turbine 14'. As can be seen from FIG. 2, the fluid passageway 42' may be a conduit 44' which turns the exhaust gas exiting the gas generator 28' by an amount less than 90 degrees. The conduit 44' has a linear section 50' and a curved section 52' which turns the exhaust fluid flow into the free turbine 14'.

As shown in FIG. 2, the fluid passageway 42' is located between the fluid operated device or free turbine 14' and the fan exit guide vanes 24'.

The exhaust gas is used to drive the fluid operated device or free turbine 14' which in turn drives the rotary device or fan 16'. After passing through the fluid operated device or free turbine 14', the exhaust gas exits rearwardly along with the fluid flow created by the rotary device or fan 16'. The exhaust gas exiting the free turbine 14' flows in the same direction as the fluid flow created by the rotary device or fan 16'.

One of the advantages of the systems described hereinabove is that they eliminate the aerodynamic losses and structural issues with other types of engine designs.

There has been provided an angled core engine. While the angled core engine has been described in the context of an embodiment thereof, other unforeseen alternatives, modifications, and variations may become apparent to those skilled in the art having read the foregoing description. Accordingly, it is intended to embrace those alternatives, modifications, and variations that fall within the broad scope of the appended claims.

## Claims

1. A system (8) which comprises:
a propulsor section (12) having a free turbine (14);
a gas generator (28) for creating an exhaust gas;
and
a fluid passageway (42) for delivering said exhaust gas to said free turbine (14), wherein said propulsor section (12) further has a fan (16) driven by said free turbine (14), wherein said propulsor section (12) further includes a casing (22) surrounding said fan (16) and a plurality of fan exit guide vanes (24) located within said casing (22), and wherein said fan (16) and said propulsor section (12) rotate about a first axis (26), wherein said gas generator (28) has a central axis (39); **characterized in that**:
said central axis (39)is angled relative to first axis (26) at an angle less than 90 degrees, such that said exhaust gas exits an outlet of said gas generator (28) in a forward direction angled towards said first axis (26);
said fluid passageway (42) comprises a plenum having a single arcuately shaped conduit (14) connected to the outlet of said gas generator (28) the plenum (42) turning said exhaust gas flowing through said plenum (42) from said forward, angled direction to a rearward direction along said first axis (26) such that the exhaust gas is delivered to and flows through said free turbine (14) in said rearward direction.

2. The system of claim 1, further comprising said gas generator (28) having an inlet (36) and an air intake (38) communicating with said inlet (36) to deliver ambient air to said gas generator (28).

3. The system of claim 1 or 2, wherein said gas generator (28) has a compressor section (30) and a turbine section (34), and wherein said compressor section (30) has at least one stage, and said turbine section (34) has at least one stage.

## Patentansprüche

1. System (8) umfassend:
einen Antriebsabschnitt (12) mit einer freien Turbine (14);
einen Gasgenerator (28) zum Erzeugen von Abgas;
und
einen Fluiddurchgang (42) zum Transportieren des Abgases zu der freien Turbine (14), wobei der Antriebsabschnitt (12) ferner einen Lüfter (16) aufweist, der von der freien Turbine (14) angetrieben wird, wobei der Antriebsabschnitt (12) ferner ein Gehäuse (22), das den Lüfter (16) umgibt, und eine Vielzahl von Lüfteraustrittsleitschaufeln (24) beinhaltet, die sich innerhalb des Gehäuses (22) befinden, und wobei der Lüfter (16) und der Antriebsabschnitt (12) um eine erste Achse (26) rotieren, wobei der Gasgenerator (28) eine zentrale Achse (39) aufweist; **dadurch gekennzeichnet dass**:
die zentrale Achse (39) bezogen auf die erste Achse (26) um einen Winkel kleiner als 90 Grad derart angewinkelt ist, dass das Abgas durch einen Auslass des Gasgenerators (28) in einer Vorwärtsrichtung austritt, die zu der ersten Achse (26) hin gewinkelt ist;
der Fluiddurchgang (42) ein Plenum umfasst, das eine einzelne bogenförmige Leitung (14) aufweist, die mit dem Auslass des Gasgenerators (28) verbunden ist, wobei das Plenum (42) das Abgas, das durch das Plenum (42) strömt, von der gewinkelten Vorwärtsrichtung in eine nach hinten gerichtete Richtung entlang der ersten Achse (26) derart wendet, dass das Abgas zur freien Turbine (14) transportiert wird und durch diese in die nach hinten gerichtete Richtung strömt.

2. System nach Anspruch 1, ferner den Gasgenerator (28) umfassend, der einen Einlass (36) und einen Lufteinlass (38) aufweist, der in Kommunikation mit dem Einlass (36) steht, um Umgebungsluft zu dem Gasgenerator (28) zu transportieren.

3. System nach Anspruch 1 oder 2, wobei der Gasgenerator (28) einen Kompressorabschnitt (30) und einen Turbinenabschnitt (34) aufweist, und wobei der Kompressorabschnitt (30) und der Turbinenabschnitt (34) mindestens eine Stufe aufweisen.

## Revendications

1. Système (8) qui comprend :
une section propulseur (12) comportant une turbine libre (14) ;
un générateur de gaz (28) pour créer un gaz d'échappement ; et
un passage pour fluide (42) pour distribuer ledit gaz d'échappement à ladite turbine libre (14), dans lequel ladite section propulseur (12) comporte en outre un ventilateur (16) entraîné par ladite turbine libre (14), dans lequel ladite section propulseur (12) comprend en outre un carter (22) entourant ledit ventilateur (16) et une pluralité d'aubes de guidage de sortie de ventilateur (24) situées dans ledit carter (22), et dans lequel ledit ventilateur (16) et ladite section propulseur (12) tournent autour d'un premier axe (26), dans lequel ledit générateur de gaz (28) comporte un axe central (39) ; **caractérisé en ce que**
ledit axe central (39) est incliné par rapport au premier axe (26) selon un angle de moins de 90 degrés, de telle sorte que ledit gaz d'échappement sort par une sortie dudit générateur de gaz (28) dans une direction vers l'avant inclinée vers ledit premier axe (26) ;
ledit passage pour fluide (42) comprend un plénum ayant un unique conduit de forme arquée (14) relié à la sortie dudit générateur de gaz (28), le plénum (42) faisant tourner ledit gaz d'échappement s'écoulant à travers ledit plénum (42) depuis ladite direction inclinée vers l'avant vers une direction vers l'arrière le long dudit premier axe (26) de telle sorte que le gaz d'échappement est distribué à ladite turbine libre (14) et s'écoule à travers celle-ci dans ladite direction vers l'arrière.

2. Système selon la revendication 1, comprenant en outre ledit générateur de gaz (28) comportant une entrée (36) et une admission d'air (38) communiquant avec ladite entrée (36) pour distribuer l'air ambiant audit générateur de gaz (28).

3. Système selon la revendication 1 ou 2, dans lequel ledit générateur de gaz (28) comporte une section compresseur (30) et une section turbine (34), et dans lequel ladite section compresseur (30) comporte au moins un étage, et ladite section turbine (34) comporte au moins un étage.
